# EUROPÄISCHE PATENTSCHRIFT

(11) **EP 0 477 596 B1**
(45) Veröffentlichungstag und Bekanntmachung des Hinweises auf die Patenterteilung: **21.12.1994**
(21) Anmeldenummer: 91114770.0
(22) Anmeldetag: 02.09.1991
(51) Int. Cl.: H02M 3/338

(54) **Gleichspannungssperrwandlerschaltung**
DC flyback converter circuit
Circuit de convertisseur de tension continu à récupération

(30) Priorität: 26.09.1990 AT 1943/90
(43) Veröffentlichungstag der Anmeldung: 01.04.1992
(73) Patentinhaber: Siemens Aktiengesellschaft Österreich, 1210 Wien (AT)
(72) Erfinder: Drescher, Hans,, A-1210 Wien (AT)
(74) Vertreter: Matschnig, Franz, Dipl.-Ing.

(56) Entgegenhaltungen:
- DE-A- 3 007 566
- PATENT ABSTRACTS OF JAPAN, vol. 11, no. 083 (E-489) 13. März 1987 ; & JP-A-61 236 370
- PATENT ABSTRACTS OF JAPAN, vol. 10, no. 386 (E-467) 24. Dezember 1986 ; & JP-A-61 177 165
- PATENT ABSTRACTS OF JAPAN, vol. 6, no. 245 (P-159) 3. Dezember 1982; & JP-A-57 143 623

## Beschreibung

Die Erfindung betrifft eine Gleichspannungssperrwandlerschaltung.

Derartige Schaltungen sind beispielsweise aus der DE-OS 34 20 033 A1 bekannt. Diese Schrift nennt als Stand der Technik eine Schaltung der obengenannten Art, bei der über einen Regelkreis das Ein-Ausschaltverhältnis des Schalttransistors in Abhängigkeit von der Ausgangsspannung gesteuert wird.

Nach der DE-PS 33 35 153 C2 wird bei einer Schaltung der obengenannten Art Zur Regelung der Ausgangsspannung eine Dämpfung der Schwingung des Oszillatorschaltkreises über ein Rückkoppelnetztwerk empfohlen.

Weiterhin sind Wandlerschaltungen bekannt aus der US-PS 4,862,338; der US-PS 4,758,937; der US-PS 4,499,531; der EP-OS 0 346 478 und der DE-OS 30 07 566. Diese Schriften zeigen Schaltungsanordnungen mit jeweils einem Schaltelement, einem Transformator, der zwei Primärwicklungen und eine Sekundärwicklung umfaßt, weiterhin mit einer Schaltelement-Ansteuerung und einem Rückkopplungszweig.

Gegenüber den in diesen Schriften offenbarten Schaltungsanordnungen unterscheidet sich die Erfindung, die in einer Gleichspannungssperrwandlerschaltung nach dem Anspruch 1 besteht, unter anderem durch die Art der Ausführung der Schaltelement-Ansteuerung.

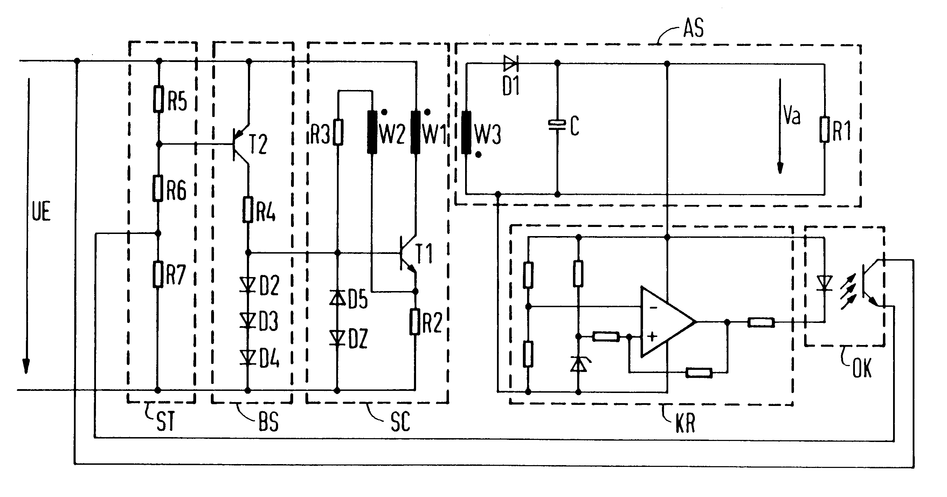

Die Erfindung wird anhand eines in der Zeichnung ausgeführten Ausführungsbeispiels näher erläutert.

Die Schaltung umfaßt die Funktionsblöcke Schwingschaltung SC, Basisstromkreis BS, Spannungsteiler ST, einen Ausgangsstromkreis AS sowie einen Komparator KR und einen Optokoppler OK. Die Schwingschaltung SC besteht aus einem Schalttransistor T1, seinem Emitterwiderstand R2 und einer, zwischen den Kollektor des Schalttransistors und den Pluspol der Versorgungsspannung geschalteten ersten Primärwicklung W1 eines Transformators. Die Ansteuerung der Basis des Schalttransistors T1 erfolgt mittels einer zweiten Primärwicklung W2 des Transformators, die zwischen den Emitter des Schalttransistors T1 und einen Basisvorwiderstand R3 geschaltet ist. Zur Begrenzung der negativen Spannung sind zwischen die Basis des Schalttransistors T1 und den Minuspol der Versorgungsspannung noch eine Diode D5 und eine Zehnerdiode DZ in Serie geschaltet.

Der Basisstromkreis BS umfaßt einen Transistor T2 dessen Emitter mit dem Pluspol der Versorgungsspannung, dessen Kollektor über einen Widerstand R4 mit der Basis des Schalttransistors T1 und dessen Basis mit dem Ausgang des Spannungsteilers ST verbunden ist. Weiters beinhaltet er drei, in Serie geschaltete Dioden D2, D3, D4 zur Begrenzung der positiven Basisspannung des Schalttransistors T1.

Der zwischen den beiden Polen der Versorgungsspannung liegende Spannungsteiler ST besteht aus drei in Serie geschalteten Widerständen R5, R6, R7. Die Verbindung der beiden Widerstände R5, R6, der Eingang des Spannungsteilers ST, ist mit dem Emitterausgang des Optokopplers OK verbunden. Der mit der Basis des Transistors T2 verbundene Ausgang des Spannungsteilers ST wird durch die Verbindung der Widerstände R5 und R6 gebildet.

Der Ausgangsstromkreis AS besteht aus einer Sekundärwicklung W3 des Transformators, einer Diode D1, einem Ladekondensator C und einem Lastwiderstand R1. Die beiden Pole der am Lastwiderstand R1 anliegenden Ausgangsspannung sind mit dem Eingang des Komparators KR verbunden. Dieser umfaßt eine übliche Schaltung, bestehend aus Operationsverstärker, Widerstandsnetzwerk und Spannungsreferenz, auf die hier nicht näher eingegangen wird.

Der Ausgang des Komparators KR ist mit dem Eingang des Optokopplers OK verbunden. Dessen Ausgang ist einerseits an den Pluspol der Versorgungsspannung und andererseits an den Eingang des Spannungsteilers angeschlossen.

Die Funktion der Schaltung kann man sich wie folgt vorstellen: nach Anlegen der Versorgungsspannung wird der Schalttransistor T1 durch den Strom über Transistor T2 und Widerstand R4 leitend. Dadurch nimmt der durch die erste Primärwicklung W1 fließende Strom zu. Diese Stromänderung bewirkt in der zweiten Primärwicklung W2 eine Spannung, die über den Widerstand R3 das Basispotential verstärkt und den Transistor durchsteuert. Der Höchstwert des Stromes durch die erste Primärwicklung W2 wird durch den Emitterwiderstand R2 in Verbindung mit den drei Dioden D2, D3 und D4 festgelegt. Nach Erreichen dieses Höchstwertes nimmt die Änderung des Magnetfeldes ab. Die Spannung an der zweiten Primärwicklung W2 kehrt sich um, wodurch der Schalttransistor T1 sehr rasch gesperrt wird. Diese Sperre bewirkt durch die große Stromänderung eine hohe Spannungsinduktion in den beiden Wicklungen W2 und W3. Über die Sekundärwicklung W3 und die Diode D1 wird der Ladekondensator C aufgeladen und die in der ersten Primärwicklung W1 gespeicherte Energie in den Kondensator übertragen. Nach Beendigung des Stromflusses fällt die Spannung an der zweiten Primärwicklung W2 zusammen, der Schalttransistor T1 beginnt zu leiten und startet damit einen neuen Schwingungsvorgang.

Jeder Ladevorgang erhöht die Spannung am Ladekondensator C, bis daß ein Gleichgewichtszustand zwischen der, mittels Transformator zugeführten und der über den Lastwiderstand R1 abgegebenen Ladungsmenge besteht.

Für eine konstante und begrenzte Ausgangsspannung wird die, mittels Transformator zugeführte, Ladungsmenge den Lastverhältnissen angepaßt. Dazu wird mittels Komparator KR die Ausgangsspannung mit einem Maximalwert verglichen. Bei Überschreiten dieses Wertes wird über den Optokoppler OK die Basis des Transistors T2 auf das Pluspotential der Versorgungsspannung gelegt und der Transistor T2 gesperrt. Die dadurch erzielte Potentialverminderung an der Basis des Schalttransistors T1 beeinflußt den aktuellen Schwingungsvorgang nicht, das Einsetzen der nächsten Schwingung wird jedoch unterdrückt.

Nachdem die Ausgangsspannung einen Minimalwert unterschritten hat, schaltet der Komparator wieder um, der Transistor T2 wird leitend und der nächste Schwingungsvorgang setzt ein. Minimalwert und Maximalwert sind durch die einstellbare Eingangshysterese des Komparators festgelegt.

Die beschriebene Schaltung gewährleistet eine wirkungsvolle Spannungsstabilisierung bei geringem Verlustleistungsbedarf und galvanischer Trennung von Eingangs- und Ausgangsspannung.

Der intermittierende Schwingungsbetrieb führt überdies zu einer verlustarmen Arbeitsweise des Transformators.

## Patentansprüche

1. Gleichspannungssperrwandlerschaltung,
- mit einem ersten Transistor (T1) als Schalter,
- mit einem Transformator mit zwei Primärwicklungen (W1, W2) und einer Sekundärwicklung (W3), dessen erste Primärwicklung (W1) zwischen dem Kollektor des ersten Transistors (T1) und dem Pluspol einer Versorgungsspannung (UE) geschaltet ist, dessen zweite Primärwicklung (W2) zwischen dem Emitter und einem Basisvorwiderstand des ersten Transistors (T1) angeordnet ist,
- mit einem Emitterwiderstand (R2) des ersten Transistors (T1), der an einen Minuspol der Versorgungsspannung (UE) angeschlossen ist, und mit einer Serienschaltung einer Diode (D5) und einer Zenerdiode (DZ) zwischen der Basis des ersten Transistors (T1) und dem Minuspol der Versorgungsspannung (UE),
- mit einem Basisstromkreis (BS), bestehend aus einem zweiten Transistor (T2), dessen Emitter mit dem Pluspol der Versorgungsspannung (UE) verbunden ist, bestehend weiterhin aus einem Kollektorwiderstand (R4) des zweiten Transistors (T2), der mit der Basis des ersten Transistors (T1) verbunden ist, und einer Reihenschaltung von drei Dioden (D2, D3, D4) zwischen der Basis des ersten Transistors (T1) und dem Minuspol der Versorgungsspannung (UE),
- mit einem Spannungsteiler (ST) bestehend aus drei in Serie geschalteten Spannungsteiler-Widerständen (R5, R6, R7) von denen der erste (R5) zwischen dem Pluspol der Versorgungsspannung (UE) und der Basis des zweiten Transistors (T2) angeordnet ist, von denen der zweite (R6) zwischen der Basis des zweiten Transistors (T2) und einem Spannungsteilereingang angeordnet ist und von denen der dritte (R7) zwischen dem Spannungsteilereingang und dem Minuspol der Versorgungsspannung (UE) angeordnet ist,
- weiterhin mit einem Ausgangsstromkreis (AS), der gebildet ist aus der Sekundärwicklung (W3) des Transformators, einer Diode (D1), und einem Glättungskondensator (C) und
- mit einem Rückkopplungszweig, bestehend aus einem Komparator (KR) zum Vergleich einer am Glättungskondensator (C) anliegenden Ausgangsspannung (Va) mit einem vorgegebenen Spannungswert, und einem Optokoppler (OK) zwischen einem Ausgang des Komparators (KR) und dem Eingang des Spannungsteilers (ST), wobei der Ausgang des Optokopplers einerseits an den Pluspol der Versorgungsspannung und andererseits an den Eingang des Spannungsteilers (R₆, R₇) angeschlossen ist.

## Claims

1. DC flyback converter circuit,
- having a first transistor (T1) as a switch,
- having a transformer comprising two primary windings (W1, W2) and a secondary winding (W3), the first primary winding (W1) of the transformer being connected between the collector of the first transistor (T1) and the positive pole of a supply voltage (UE), the second primary winding (W2) of the transformer being disposed between the emitter and a base dropping resistor of the first transistor (T1),
- with an emitter resistance (R2) of the first transistor (T1), which is connected to a negative pole of the supply voltage (UE), and having a series connection of a diode (D5) and a Zener diode (DZ) between the base of the first transistor (T1) and the negative pole of the supply voltage (UE),
- having a base circuit (BS) comprising a second transistor (T2), the emitter of which is connected to the positive pole of the supply voltage (UE), further comprising a collector resistor (R4) of the second transistor (T2), which is connected with the base of the first transistor (T1), and a series arrangement of three diodes (D2, D3, D4) between the base of the first transistor (T1) and the negative pole of the supply voltage (UE),
- having an attenuator (ST) comprising three in-line attenuator resistors (R5, R6, R7), of which the first (R5) is disposed between the positive pole of the supply voltage (UE) and the base of the second transistor (T2), the second attenuator resistor (R6) is disposed between the base of the second transistor (T2) and an attenuator input and the third attenuator resistor (R7) is disposed between the attenuator input and the negative pole of the supply voltage (UE),
- furthermore having an output circuit (AS), which is formed from the secondary winding (W3) of the transformer, a diode (D1), and a smoothing capacitor (C) and
- having a feedback path consisting of a comparator (KR) for the purpose of comparing an output voltage (Va) prevailing at the smoothing capacitor with a predetermined voltage value, and an optocoupler (OK) between an output of the comparator (KR) and the input of the attenuator (ST), wherein the output of the optocoupler is connected on the one side to the positive pole of the supply voltage and on the other side to the input of the attenuator (R6, R7).

## Revendications

1. Montage convertisseur de tension continue à blocage,
- avec un premier transistor (T1) comme commutateur,
- avec un transformateur présentant deux enroulements primaires (W1, W2) et un enroulement secondaire (W3), et dont le premier enroulement primaire (W1) est connecté entre le collecteur du premier transistor (T1) et le pôle positif d'une tension d'alimentation (UE), et dont le second enroulement primaire (W2) est disposé entre l'émetteur et une résistance série de base du premier transistor (T1),
- avec une résistance d'émetteur (R2) du premier transistor (T1), qui est raccordée à un pôle négatif de la tension d'alimentation (UE), et avec un circuit série, constitué d'une diode (D5) et d'une diode Zéner (DZ), entre la base du premier transistor (T1) et le pôle moins de la tension d'alimentation (UE),
- avec un circuit de courant de base (BS), constitué d'un second transistor (T2) dont l'émetteur est relié au pôle positif de la tension d'alimentation (UE), constitué en outre d'une résistance de collecteur (R4) du second transistor (T2) qui est reliée à la base du premier transistor (T1), et d'un circuit série de trois diodes (D2, D3, D4) entre la base du premier transistor (T1) et le pôle négatif de la tension d'alimentation (UE),
- avec un diviseur de tension (ST) constitué de trois résistances de diviseur de tension (R5, R6, R7) montées en série, dont la première (R5) est disposée entre le pôle positif de la tension d'alimentation (UE) et la base du second transistor (T2), la deuxième (R6) est disposée entre la base du second transistor (T2) et une entrée du diviseur de tension, et la troisième (R7) est disposée entre l'entrée du diviseur de tension et le pôle négatif de la tension d'alimentation (UE),
- avec en outre un circuit de courant de sortie (AS) qui est formé de l'enroulement secondaire (W3) du transformateur, d'une diode (D1) et d'un condensateur de filtrage (C), et
- avec une branche de réaction, constituée d'un comparateur (KR) pour comparer une tension de sortie (Va) appliquée au condensateur de filtrage (C) à une valeur allouée de tension, et d'un coupleur opto-électronique (OK) entre une sortie du comparateur (KR) et l'entrée du diviseur de tension (ST), la sortie du coupleur opto-électronique étant raccordée d'une part au pôle positif de la tension d'alimentation, et d'autre part à l'entrée du diviseur de tension (R6, R7).
